Europäisches Patentamt

European Patent Office

Office européen des brevets

(19)

(11) Publication number: **0 163 958**
**B1**

## (12) EUROPEAN PATENT SPECIFICATION

(45) Date of publication of patent specification: **22.06.88**

(21) Application number: **85105447.8**

(22) Date of filing: **17.03.82**

(80) Publication number of the earlier application in accordance with Art. 76 EPC: **0 088 817**

(51) Int. Cl.⁴: **F 16 L 15/00,** F 16 L 39/00,
E 21 B 17/08

(54) Corrosion-resistant pipe coupling structures.

(43) Date of publication of application:
**11.12.85 Bulletin 85/50**

(45) Publication of the grant of the patent:
**22.06.88 Bulletin 88/25**

(84) Designated Contracting States:
**DE FR GB NL SE**

(56) References cited:
**none**

(73) Proprietor: **KAWASAKI JUKOGYO KABUSHIKI KAISHA**
**1-1 Higashikawasaki-cho 3-chome**
**Chuo-ku Kobe-shi Hyogo-ken (JP)**

(72) Inventor: **Yoshida, Toshio**
**2-23, Rikyumae-Cho 1-Chome, Suma-Ku**
**Kobe-Shi Hyogo-Ken (JP)**
Inventor: **Matsui, Shigetomo**
**4-25, Higashiyama-Cho**
**Higashiosaka-Shi Osaka-Fu (JP)**
Inventor: **Atsuta, Toshio**
**6-21, Uenomaru 2-Chome**
**Akashi-Shi Hyogo-Ken (JP)**

(74) Representative: **Klunker, Hans-Friedrich, Dr. et al**
**Patentanwälte Klunker . Schmitt-Nilson . Hirsch**
**Winzererstrasse 106**
**D-8000 München 40 (DE)**

Courier Press, Leamington Spa, England.

## Description

This invention relates to a corrosion-resistant pipe structure, and more particularly to a pipe coupling structure used for piping in chemical and other plants, oil and gas pipelines, well tubes, and like piping.

In the piping and pipelines referred to above, multiple-wall composite pipes are used for transporting fluids such as those containing corrosive substances. A typical multiple-wall composite pipe is a dual or double-wall pipe in which the inner wall is a liner tube made of a corrosion-resistant material for effective conducting of corrosive fluid and the outer wall or pipe is designed to provide strength to withstand internal pressures of the corrosive fluid and external forces. For example, there is a double-wall pipe comprising a stainless-steel inner pipe and a carbon-steel outer pipe in which the inner pipe is interference-fitted.

There are certain limitations to the length of such multiple-wall pipes due to restrictions in the manufacture of the pipes and to conditions in which the pipes are installed on site. Therefore, pipe couplings are used to obtain a desired length of piping as is well known in the art. As a matter of course, the pipe couplings are also required to have an internal corrosion resistance as well as a mechanical strength to withstand internal pressures and external forces.

A pipe coupling structure as defined in the precharacterizing portion of the claim is known from GB—A—1 428 433 or US—A—3 870 351.

The radially inner surface of the annular projection is made to have the same diameter as the inner diameter of the two pipes to be coupled whereby a smooth, continuous or uninterrupted cylindrical inner surface is formed from one pipe to the other. This means that the annular projection of the coupling member is exposed to the corrosive fluid or fluids flowing in the pipes.

As a consequence it has been customary to make the coupling member of a corrosion-resistant material such as stainless steel. This gives the coupling sufficient resistance to corrosive fluids but is disadvantageous in that the coupling is very expensive and lacks sufficient strength, thereby resulting in increased thickness and weight and in interference with other elements and devices in and along pipe line.

DD—A—130 591 discloses a pipe coupling structure having a tubular coupling member including on its inner surface an intermediate annular projection the diameter of which is greater than the inner diameter of the two pipes to be coupled. A lining may be provided on the inner surfaces of the pipes, on the actually opposing end parts of the pipes and on the inner surface of the annular projection. However, in contrast to the corrosion-resistant pipe coupling structure defined in the precharacterizing portion of the claim, in this coupling structure the annular projection is not abuttingly interposed between the opposing end parts of the pipes and corrosive fluids may enter into the space between the end parts of the tubes and the annular projection. Applying the linings to said parts involves a plurality of manufacturing steps which renders this prior art structure expensive.

It is an object of the invention to provide a pipe coupling structure, wherein the strength of the coupling member is sufficient to withstand internal pressures and external forces, while the intermediate annular projection is resistant to corrosive fluids.

In accordance with the present invention, in a pipe coupling structure defined in the precharacterizing portion of the claim, this object is achieved by the features defined in the characterizing portion of the claim.

The detailed nature, utility, and further features of this invention will be more clearly apparent from the following detailed description when read in conjunction with the accompanying drawings, briefly described below.

Brief Description of the Drawings

FIG. 1 is a fragmental longitudinal section of a pipe coupling structure according to an embodiment of this invention;

FIG. 2 is a view explanatory of a padding used to form an annular projection shown in FIG 1;

FIG. 3 is a fragmental longitudinal section of a coupling member of a second embodiment of the invention and

FIG. 4 is a fragmental longitudinal section showing a known pipe coupling structure.

Referring to FIG. 4 there is illustrated a known pipe coupling structure comprising two dual or doublewall composite pipes 1 to be coupled, and a screwed coupling member 2 having a substantially cylindrical body. Each of the double-wall composite pipes 1 comprises an outer wall or pipe 3 of carbon steel, for example, and an inner wall or pipe 4 of stainless steel, for example. The end portion of each pipe 1 is provided with outer or male screws 5.

The coupling member 2 has a pair of screw-threaded parts 6 with inner or female screws 7 which are in engagement with the male screws 5 of the pipes 1. The coupling member 2 has intermediate annular ridge or projection 8 directed radially inward between the screw parts 6 so as to be abuttingly interposed between the opposing end surfaces of the pipes 1. The annular projection 8 has annular undercut portions 9 so that an annular overhang portion 8 diverging in radially inward direction is formed. The end surfaces of the pipes 1 are shaped complementarily to the undercut portions 9 of the projection 8, as shown at 10.

When the pipes 1 are screwed into the coupling member 2, the end surfaces 10 of the pipes are brought into tight, abutting, sealing contact with the undercut portions 9, respectively.

However, with such a construction, the annular projection 8 is exposed to corrosive fluid or fluids flowing in the pipes and subject to corrosion by the fluid or fluids, so that there arise the disadvantages mentioned hereinbefore.

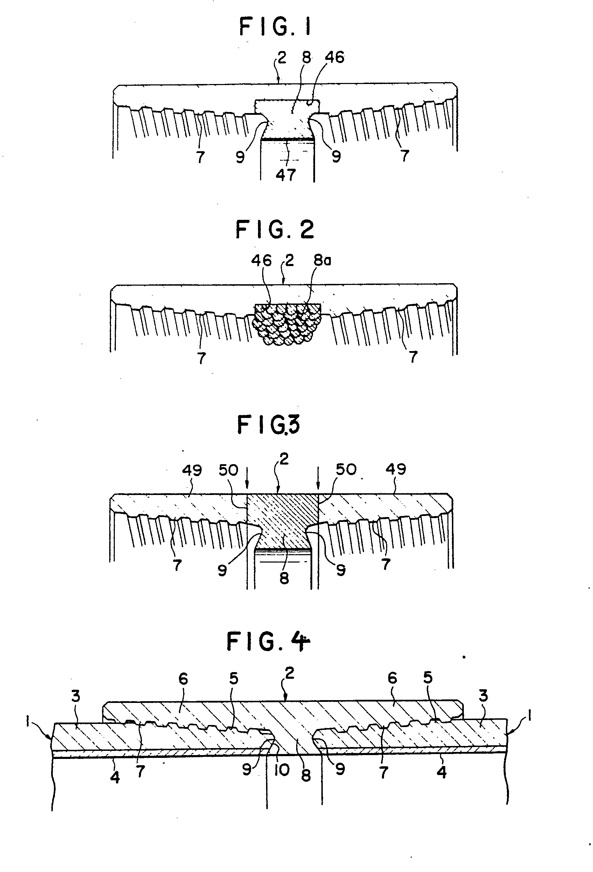

FIG. 1 illustrates a first embodiment of the invention wherein the annular projection 8 entirely made of corrosion-resistant material is along its outer periphery embedded in an annular groove 46 of the coupling member 2. In order to form the projection 8, a cylindrical main body of the coupling member 2 is first formed with an annular groove 46 as illustrated in FIG. 2, and then an annular padding 8a of stainless steel, for example, is overlay-welded in the groove 46. Thereafter, the mass or padding 8a is machined into the shape having an inner cylindrical surface 47 and a pair of undercut portions 9.

In the second embodiment of the invention, shown in Fig. 3, the annular projection 8 has its outer diameter equal to the outer diameter of the coupling member 2. The annular projection 8 is prepared separately, and welded to cylindrical members 49 at 50 by electron beam welding, for example, as indicated by arrows.

## Claims

1. A corrosion-resistant pipe coupling structure comprising: a tubular coupling member (2) including an inner surface and axially opposite ends having internal screw threads (7) for engaging male screw threads provided on axially opposing end parts of two pipes (1, 1) to be coupled, the internal surface of each of the pipes being resistant to corrosive fluids, said coupling member (2) including an intermediate annular projection (8) extending radially inwardly from said inner surface to be abuttingly engaged by the opposing end parts of the pipes (1, 1), characterized in that the pipes have secured thereto an inner lining pipe (4) providing said resistance to corrosion, and said annular projection (8) is formed entirely of a corrosion-resistant annular member (8) embedded in the coupling member (2) at the radially outermost part thereof. (FIGS. 1 and 3).

2. A pipe coupling structure as claimed in claim 1, wherein said annular member (8) is embedded in an annular groove (46) formed in the radially inner surface of the coupling member (2). (FIG. 1).

3. A pipe coupling structure as claimed in claim 2, wherein said annular member (8) is formed of a machined mass of said corrosion-resistant material. (FIG. 2).

4. A pipe coupling structure as claimed in claim 1, wherein said coupling member (2) comprises a pair of axially spaced cylindrical members (49) having therein said internal threads (7), and said annular member (8) is positioned between and fixed to said cylindrical members (49). (FIG. 3).

5. A pipe coupling structure as claimed in claim 4, wherein the outer diameters of said annular and cylindrical members (8, 49) are equal. (FIG. 3).

6. A pipe coupling structure as claimed in claim 4, wherein said annular member (8) is welded to said cylindrical members (49). (FIG. 3).

7. A pipe coupling structure as claimed in claim 1, wherein said annular member (8) includes undercut portions (9) on axially opposite sides thereof. (FIGS. 1 and 3).

## Patentansprüche

1. Korrosionsbeständige Rohrkupplungsstruktur mit einem rohrförmigen Kupplungsteil (2), das eine innere Oberfläche und axial entgegengesetzte Enden mit inneren Schraubgängen (7) aufweist zum Eingriff mit männlichen Schraubgängen, die an axial gegenüberliegenden Endbereichen von zwei zu kuppelnden Rohren (1, 1) vorgesehen sind, wobei die innere Oberfläche jedes der Rohre beständig gegenüber korrosiven Fluiden ist und wobei das Kupplungssteil (2) einen im mittleren Bereich angeordneten, ringförmigen Vorsprung (8) aufweist, der sich von der inneren Oberfläche radial nach innen erstreckt, um anliegend in Eingriff mit den einander zugewandten Endbereichen der Rohre (1, 1) zu kommen, dadurch gekennzeichnet, daß die Rohre daran befestigt ein inneres Auskleidungsrohr (4) aufweisen, das die Korrosionsbeständigkeit erbringt, und daß der ringförmige Vorsprung (8) vollständig aus einem korrosionsbeständigen Ringteil (8) gebildet ist, das mit seinem radial äußersten Bereich in dem Kupplungteil (2) eingebettet ist. (Fig. 1 und 3).

2. Rohrkupplungsstruktur nach Anspruch 1, bei der das Ringteil (8) in einer Ringnut (46) eingebettet ist, die in der radial inneren Oberfläche des Kupplungsteils (2) gebildet ist. (Fig. 1).

3. Rohrkupplungsstruktur nach Anspruch 2, bei der das Ringteil (8) aus einer bearbeiteten Materialmenge des korrosionsbeständigen Materials gebildet ist. (Fig. 2).

4. Rohrkupplungsstruktur nach Anspruch 1, bei der das Kupplungsteil (2) ein Paar von axial beabstandeten, zylindrischen Teilen (49) mit den inneren Schraubgängen (7) darin aufweist, und bei der das Ringteil (8) zwischen den zylindrischen Teilen (49) angeordnet und an diesen fixiert ist. (Fig. 3).

5. Rohrkupplungsstruktur nach Anspruch 4, bei der die Außendurchmesser des Ringteils (8) und der zylindrischen Teile (49) übereinstimmen. (Fig. 3).

6. Rohrkupplungsstruktur nach Anspruch 4, bei der das Ringteil (8) mit den zylindrischen Teilen (49) verschweißt ist. (Fig. 3).

7. Rohrkupplungsstruktur nach Anspruch 1, bei der das Ringteil (8) hinterschnittene Bereiche (9) an seinen axial entgegengesetzten Seiten aufweist. (Fig. 1 und 3).

## Revendications

1. Une structure de raccord de tuyau résistant à la corrosion comprenant: un raccord tubulaire (2) comportant une surface intérieure et des extrémités opposées dans la direction axiale ayant des pas de vis femelles (7) qui se vissent sur des filets mâles usinés sur les parties extrêmes opposées dans la direction axiale des deux tuyaux (1, 1) à raccorder, la surface interne de chacun des tuyaux étant résistante à des fluides corrosifs, ledit raccord (2) comprenent une partie intermédiaire annulaire en saillie (8) orientée radialement vers l'intérieur à partir de ladite surface intérieure pour s'intercaler en butée entre les parties extrêmes opposées des tuyaux (1,1), caractérisée en ce qu'il est fixé sur les tuyaux un toyau interne de garniture (4) assurant ladite résistance à la corrosion, et en ce que ladite partie annulaire en saillie (8) est entièrement constituée d'une partie annulaire résistant à la corrosion (8) enclavée dans le raccord (2) à sa partie radialement la plus extérieure (Fig. 1 et 3).

2. Une structure de raccord du tuyau selon la revendication 1, dans laquelle ladite partie annulaire (8) est enclavée dans une gorge annulaire (46) formée dans la surface radialement intérieure du raccord (2). (Fig. 1).

3. Une structure de raccord de tuyau selon la revendication 2, dans laquelle ladite partie annulaire (8) est constituée d'une masse usinée dudit matériau résistant à la corrosion. (Fig. 2).

4. Une structure de raccord du tuyau selon la revendication 1, dans laquelle ledit raccord (2) comprend deux parties cylindriques espacées dans la direction axiale (49) ayant des pas de vis femelles (7), et en ce que ladite pièce annulaire (8) est placée entre et fixée auxdites pièces cylindriques (49). (Fig. 3).

5. Une structure de raccord du tuyau selon la revendication 4, dans laquelle les diamètres extérieurs desdites pièces annulaires et cylindriques (8, 49) sont égaux. (Fig. 3).

6. Une structure de raccord du tuyau selon la revendication 4, dans laquelle ladite pièce annulaire (8) est soudée auxdites pièces cylindriques (49). (Fig. 3).

7. Une structure de raccord de tuyau, selon la revendication 1, dans laquelle ladite pièce annulaire (8) comporte des portions dégagées (9) sur ses côtés opposés dans la direction axiale. (Fig. 1 et 3).

FIG. 1

FIG. 2

FIG 3

FIG. 4

1